# EUROPEAN PATENT APPLICATION

(11) **EP 2 384 799 A1**
(43) Date of publication of application: **09.11.2011**
(21) Application number: 10380064.5
(22) Date of filing: 04.05.2010
(51) Int. Cl.: B01D 1/00, B01D 5/00, C02F 1/14, C02F 1/04

(54) **Autonomous distillation system**

(71) Applicant: Segovia Usandizaga, Jaime Maria, 48992 Neguri (Vizcaya) (ES)
(72) Inventor: Segovia Usandizaga, Jaime Maria, 48992 Neguri (Vizcaya) (ES)
(74) Representative: Carvajal y Urquijo, Isabel

(57) **Abstract**

Autonomous distillation system comprising:
- a pumped water distiller (2), comprising a plurality of pipes (203) comprising a secondary heat-transfer fluid inside it, and a plurality of upper ducts (202) for vapour collection,
- a heat accumulating system (3) with an inlet and an outlet for the secondary heat-transfer fluid of the distiller pipes (203), for its heating, comprising an enclosed tank (300) which in turn comprises inside it:
- a coil (1), comprising a heat-transfer fluid inside it heated by thermal energy (8), and
- a plurality of resistors (301) supplied by electric power (9),

- a water vapour liquefaction system (4, 5, 6) and
- a clean water tank (7) to which the distilled water coming from the liquefaction system arrives.

## Description

### Field of the invention

The present invention refers to the field of marine water harnessing, and more particularly, to a water distillation system which operates autonomously for the harnessing of renewable energy.

### Background of the invention

There exist in the state of the art numerous distillation systems which are aimed at the distillation of marine water for consumption, such as EP1475136 which discloses a marine water distillation apparatus which comprises an evaporator comprising a heater, a capacitor with a cooling unit and a heat exchanger, being the heat exchanger, the evaporator and the capacitor mounted one on top of the other.

However, none of the systems known so far are capable of using renewable energies which take place in the site intended for its operation and coming from the local nature, according to the most abundant, profitable, accessible and clean energy there.

### Description of the invention

The autonomous distillation system of the invention comprises:
- a water distiller, the water being pumped with an autonomous power supply equipment (for example with photoelectric cells and a power source), comprising a plurality of pipes with secondary heat-transfer fluid (HTF2) located in the lower part of the distiller, a plurality of vapour collection upper ducts and, at least one inlet of water to be distilled
- a heat accumulating system with an inlet and an outlet for the secondary heat-transfer fluid (HTF2) of the distiller pipes, for its heating, comprising an enclosed tank which in turn comprises inside it:
   - a coil, in the lower part of the enclosed tank, comprising inside it a primary heat-transfer fluid heated by thermal energy and
   - a plurality of resistors in the upper part of the enclosed tank, supplied by electric power,
   - a liquefaction system of the water vapour collected by the collection upper ducts of the distiller, comprising a medium through which the water vapour flows, a medium through which there flows a liquid at room temperature and a heat exchanging area between the water vapour and the liquid at room temperature so that, initially, the liquid at room temperature collects the water vapour and reduces the pressure of the area through which the water vapour flows.
   - a clean water tank where the distilled water coming from the liquefaction system arrives, so that the system works autonomously.

The system of the invention is autonomous because it only uses renewable energies occurring on the site intended for its operation and coming from the local nature, according to the most abundant, profitable, accessible and clean energy there. The energies to be used could be: solar, wind, geothermal, marine, as well as any other energy newly generated or produced which resulting process is the input of calorific and electric energy.

What distinguishes the system of the invention from other systems obtaining clean water is:
- The process is carried out only through renewable energies.
- Being energetically autonomous.
- Not contaminating the natural environment where it is used in any way, as it does not generate waste, but 100% reusable products.
- The design and form of operation of the distiller
- The reduced use of energetic resources needed for the molecular separation of water and other minerals existing in its origin.
- The easiness of implementation and coupling to any geographical area with a nearby aquifer.
- No direct maintenance is required, unless there is a breakage.
- No chemical product is used for the process.
- It is a facility with a useful life of more than 20 years.
- It can convert one m3 of dirty water into rainwater in less than 20 minutes, in a continuous manner and using only renewable energy.
- It can produce a great amount of clean water or rainwater in a stable, controlled manner and in short time.
- In terms of productivity, this invention has a clean water production capacity of over 900 liters per square meter per hour, per every 5 m2 of distillation surface.
- Not having a difference of over 25% between the collected dirty water and the resulting clean water.

In nature, the pressure, density, volume and temperature differences occurring during the evaporation of a great amount of seawater as well as during its transportation, produce great amounts of clean rainwater in its destination. The system of the invention carries out the same work that occurs naturally in nature but in a controlled manner according to human will and their rain needs, without altering the environment.

### Brief description of the drawings

The following is a brief description of a series of drawings which help understand the invention better expressly relating to an embodiment of said invention presented as a non-limiting example thereof.
Figure 1 shows a scheme of the system of the invention,
Figure 2 shows a scheme of the distillation tank,
Figure 3 shows a scheme of the heat accumulating system,
Figure 4 shows a scheme of the closed liquefaction tank,
Figure 5 shows a section of the liquefaction duct,
Figure 6A shows an elevated view of the liquefaction vault,
Figure 6B shows a sectional view by the cutting line VI-VI of figure 6A,
Figure 7 shows a scheme of the clean water tank.

In the aforementioned figures, there are identified a series of references corresponding to the elements indicated below, without any limiting sense:
1. -Coil,
2. - Water distiller,
3. - Heat accumulating system,
4. - Closed liquefaction tank,
5. - Convergent liquefaction duct,
6. - Liquefaction vault,
7. - Clean water tank,
8. - Thermal energy generating system,
9. - Electric energy generating system,
10. - Waste tank,
200. - Inlet of water to be distilled,
201. - Inlet of secondary heat-transfer fluid into the distiller,
202. - Vapour collection upper ducts,
203. - Secondary heat-transfer fluid pipe,
204. - Outlet of secondary heat-transfer fluid from the distiller,
300. - Enclosed tank,
301. - Resistors,
400. - Liquefaction tank,
401. - Water ducts,
402. - Cooling tank,
500. - Outer insulating pipe of the liquefaction duct,
501. - Inner circulation pipe of the liquefaction duct,
502. - Fastening ribs,
600. - Water vapour disperser,
601. - Water disperser,
602. - Vault base,

### Detailed description of an embodiment

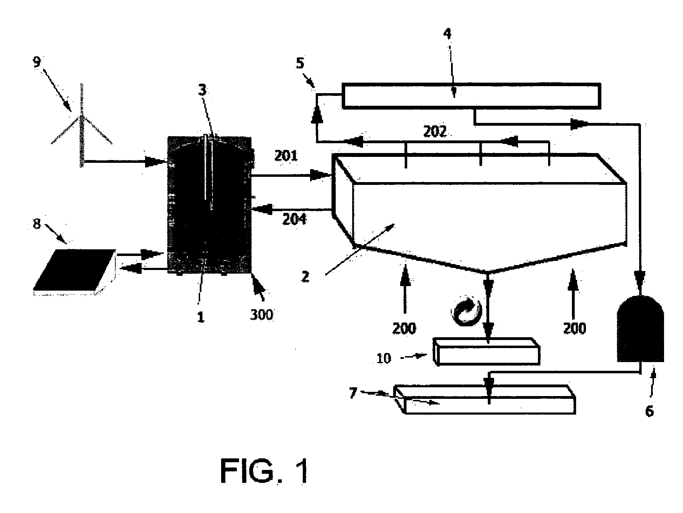

The system of the invention is a system based on the heat to carry out the water distillation process. To that end there are used two tanks as shown in figure 1. In the first one, called distiller (2), from the heat produced by the tubes located in the lower part thereof, the water molecule is broken and the distillation is produced, that is, the water evaporates. The second tank is a heat accumulator comprising a tank or accumulator for heat treatment (3), and two power generation phases.

Thus, as it can be seen in figure 1, the system of the invention comprises:
- a pumped water distiller (2) comprising:
   - at least one inlet (200) of water to be distilled,
   - a plurality of pipes (203) containing inside them a secondary heat-transfer fluid, located in the lower part of the distiller (2), and
   - a plurality of vapour collection upper ducts (202),
- a heat accumulating system (3) with an inlet and an outlet for the secondary heat-transfer fluid (HTF2) of the distiller pipes (203), for its heating, comprising an enclosed tank (300) which in turn comprises inside it:
   - a coil (1), in the lower part of the enclosed tank (300), comprising in its inner area a primary heat-transfer fluid (HTF1) heated by thermal energy (8) and
   - a plurality of resistors (301) in the upper part of the enclosed tank (300), supplied by an electric power generation system (9), for example local wind energy, with which it is possible to increase the temperature of the secondary heat-transfer fluid (HTF2) of the distiller pipes (203) up to temperatures higher than the boiling temperature of the liquid to be evaporated,
- a liquefaction system of the water vapour obtained in the distiller comprising at least a convergent liquefaction duct (6) and a secondary liquefaction chamber or vault (5),
- a clean water tank (7) to which the distilled water coming from the liquefaction chamber enters,

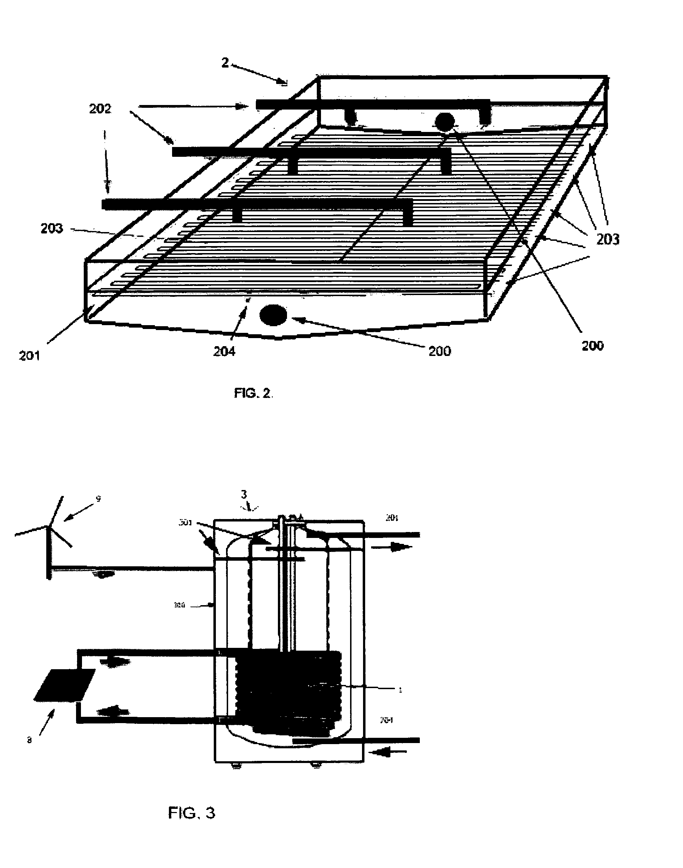

### a) Pumped water distiller (2) (Figure 2)

The distiller (2) is one of the main elements of the system of the invention, where the water evaporation process takes place and it is a structure which can be built alone or in a combined manner using concrete, any metal or alloy thereof, PVC, methacrylate, any type of plastic and/or any type of wood or resin. The shape can be rectangular, square, round or elliptical; being recommended the rectangular shape and it comprises a flat and even roof.

The distiller (2) comprises at least an inlet (200) of water to be distilled, a plurality of pipes conductive of a secondary heat-transfer fluid (HTF2) (203) inside the distiller (2) with their corresponding inlets (201) and outlets (204), and a plurality of upper ducts (202) for collection of vapour with their corresponding regulated pressure valves which open when the pressure is equal to or greater than what is established by the system controller. Each valve has a pressure sensor connected to the computer system of the system.

Since the distiller (2) is in continuous contact with the water to be distilled, salty or aggressive, the use of stainless steel is recommended for building the distiller.

The total height of the distiller must not be higher than 18% of the plant surface in total square meters of the distiller. The total minimum volume of the distiller in cubic meters depends on the number of cubic meters to be distilled per hour.

The titanium or stainless steel pipes (203), preferably titanium, are located in the interior part of the distiller (2). Each pipe (203) is joined to the distiller (2) by a thread system, also made of titanium or stainless steel, and which can be dismounted or changed in an ergonomic manner regarding access, mounting and dismantling. At the end of each pipe (203) there enters a secondary fluid (HTF2) coming from the heat accumulating system (3), which runs through the entire pipes and comes out through the other end returning to the heat accumulating system (3).

From the bottom of the entire distiller, there is a slope ending in an opening through which the waste which has not been evaporated is discharged. Said opening is connected to a container which accumulates waste (10).

The number and diameter of the inlets (200) through which the water to be distilled enters enable an inlet flow in the distiller; they are located in the lower part of the distiller, as shown in figure 2.

For an optimum performance of the distiller (2), the outlet temperature of the secondary heat-transfer fluid (HTF2) of the distiller must be between 55° C and 50° C.

The distiller (2) comprises temperature sensors, stopcock valves, pressure valves, flowmeters and filling sensors, etc...., the operation of which is managed by a computer system.

The pumping unit of the water to be distilled has a structure and design very similar to that of any seawater intake used in any industrial procedure. For its operation, the system of the invention has its own system of direct current coming from a primary autonomous system through photoelectric cells of at least 700W nominal, and a power supply comprising a battery of at least 150Ah. In this way, the start energy needs of a pump for the collection and sending of liquid to the distiller of water to be distilled are covered.

The pump must have the capacity for contact with salt water or any other type of contaminated or undrinkable water. The supply capacity of the pump of water to be distilled in cubic meters per hour will be directly proportional to the maximum surface of the distiller (2). The proportion will be at least 1.3 square meters of the distiller (2) surface, per each cubic meter when it is desired to carry out the distillation. As it can operate submerged or in the open air, according to the characteristics of the facility, the pump has reduced power consumption or the possibility of supplying through continuous power and supply capacity at the pressure to be determined by the final height of the distiller.

The energy needed by the system of the invention is mainly thermal. Therefore, it is contact energy where the thermal transference occurs through contact and temperature differences. Water is heated in a distiller, during a short period of time, at a temperature producing its evaporation.

### b) Heat accumulating system (3) (Figure 3)

The heat accumulating system shown in figure 3 comprises a tank or accumulator for heat treatment (300), and comprises a coil (1), in the lower part of the enclosed tank (300), which contains inside it a primary heat-transfer fluid (HTF1) heated by solar, thermal, thermodynamic solar energy, geodynamic, geothermal, geological, refractory or any kind of energy which directly or indirectly produces heat whether it is renewable or not by a thermal energy generating system (8), for example a solar collector, and a plurality of resistors (301) in the upper part of the enclosed tank (300), supplied by an electric power generating system (9), for example by local wind energy, with which it is possible to attain a temperature increase of the secondary heat-transfer fluid (HTF2) of the distiller pipes (203) up to temperatures higher than the boiling temperature of the liquid to be evaporated.

The proportion of necessary kilocalories, and therefore, the energy necessary to produce the thermal leap to the temperature necessary for each case depends on the atmospheric temperature of the area and on the temperature at which it is desired to regulate the primary outlet exchanger.

The heating process of the primary heat-transfer fluid (HTF1) circulating through the coil (1) occurs through the ByPass process, until the optimum temperature required for each case is obtained, not being higher than 120°C. The length of the coil (1) is enough to perform the necessary thermal transfer to put the secondary fluid (HTF2) on the distiller pipes (203) at 120° C, if necessary. The thermal differential and the heat losses will not surpass in any case 2.3° C, from the end of the exchanger to the coil (1) outlet, until the energy supply in the required source. Based on the calculations of the volume of water to be distilled in m3, the primary circuit produces at least 0.8 kilocalories per m3 of water to be distilled per hour.

Both the temperature control and the flow or pressure control is controlled by a computer control system, with which each sensor for each facility is parametrized and controlled at all times.

The primary heat-transfer fluid (HTF1) of the coil (1) has a chemical composition of at least 12% propylene glycol and/or ethylene glycol. The rest is distilled water.

In turn, the choice of the composition of the primary heat-transfer fluid (HTF1) of the coil (1) is based on criteria of a freezing temperature not lower than 5 °C under the lowest temperature of an entire year, and the evaporation temperature will not be higher than 150°C. The density of the primary heat-transfer fluid (HTF1) of the coil (1) will be determined by the place where the autonomous system of the invention is installed.

In the case that no power source through thermal solar energy is used, the procedure will be basically the same, being necessary to introduce the primary heat-transfer fluid (HTF1) through a duct, in which there is a thermal transfer and finally leaving the energy supply to the circuit described above.

The purpose of the heat accumulating system (3) is to heat the secondary heat-transfer fluid (HTF2) of the enclosed tank (300) from the initial operating temperature, or from the temperature of outlet from the distiller (3), up to a maximum temperature of 150 °C, or up to the appropriate temperature determined by the control means, and insert it into the plurality of pipes (203) of the distiller (2).

The power generation is carried out with any renewable energy which produces enough electric power to maintain the batteries or accumulators continuously full, with minimum 5-calendar day autonomy per each 10m3 of distilled water or according to the study of the wind in the area.

In any of these cases, it will not be possible to use any type of energy that requires a periodic supply such as with fossil fuels, chemical products, synthetic substances or any product which does not come from the air, wind, sun, subsoil, sea or any product with a degrading capacity higher than 30 days.

According to the services of each place, it is used as energy for the heat accumulating system (3) the renewable energy that best adapts to the site and best guarantees its supply, being possible to combine several ones, to that end.

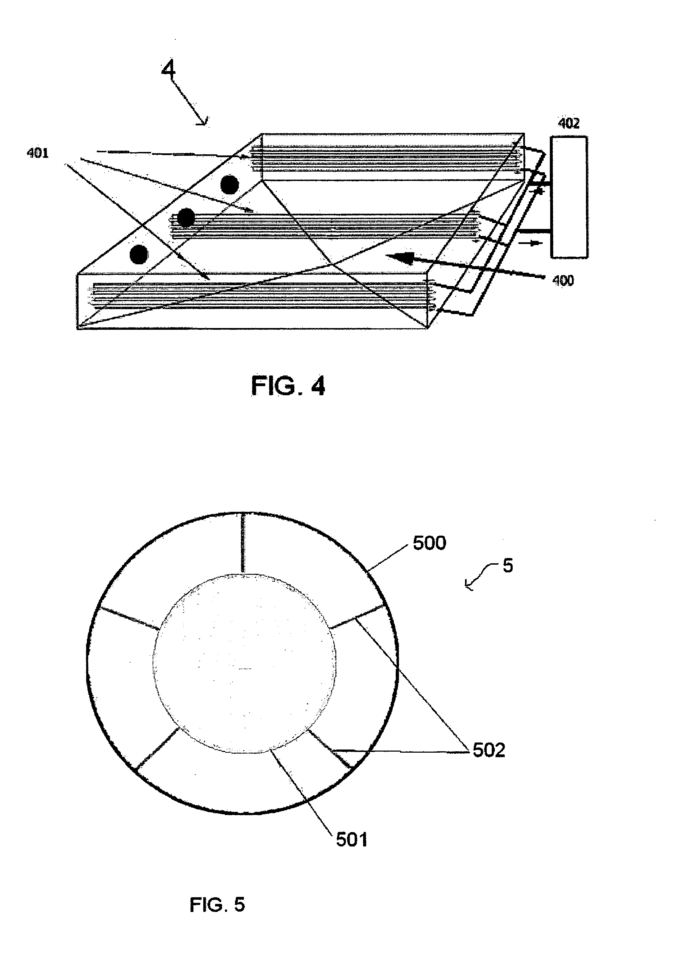

### c) Water vapour liquefaction system (Figures 4, 5 and 6)

The liquefaction system must be configured in such a way that heat exchange is inertially produced between the water vapour collected by the pipes (203) of the distiller (2) and a liquid with a temperature of room temperature at the most, so that the liquid at room temperature captures the heat of the water vapour and reduces the pressure of the area through which the water vapour flows. There exist three types of liquefaction systems:
c1) Liquefaction system in closed tank (4), Figure 4:
   The water vapour flows through a liquefaction tank (400) with a surface equal to that of the distiller (2) through which the water vapour coming from the distiller (2) enters. Inside said tank there is a plurality of metal ducts (401) through which water at room temperature flows. The contact of the water vapour coming from the distiller with the ducts of water at room temperature causes the desired heat exchange for the liquefaction of the water vapour.
   In order to maintain the room temperature of the liquid, it flows continuously towards an outer cooling tank (402), in which an energetically passive cooling system reduces the temperature of the liquid so that there is a continuous heat exchange in the liquefaction tank (400).
   The cooling tank (402) is a tank open on the upper part, where the heat coming from the plurality of metal ducts (401) of the liquidizing apparatus is discharged. Its main characteristics are the great contact surface with the air in its upper part and its little bottom so that from a ventilation system located in the upper part of the cooling tank, there is a fast drop to the room temperature. Once said temperature drop down to 25° C has occurred, the water will return to the liquidizing tank (400). In any case, the water outlet temperature from the cooling tank will always be lower than 55 °C. The composition of this tank can be of stainless steel, wood, any plastic component, PVC or any other which supports temperatures up to 65°C.
c2) Convergent piping conduction system (5), Figure 5:
   The liquefaction system through liquefaction convergent piping conduction (5) comprises an inner circulation pipe (501) inside of which the water vapour obtained in the distiller (2) circulates, with a longitudinal axis coaxial to the longitudinal axis of an outer insulating pipe (500) with a greater diameter than the inner circulation pipe (501). The implementation of the liquefaction system through pipes is carried out from the distiller (2), and they are joined to one solid, dry, fixed surface which does not transmit more heat than that of the pipe, and they can be underground to help the cooling of the liquidizing tube.
   Through the liquefaction duct there continuously flow two liquids:
   - the liquid evaporated in the distiller (2), still in gaseous state, and
   - a carrier cooling liquid coming from the cooling tank (402),
   which can never be in contact and the separation of which is carried out with an inner pipe. The purpose of the outer area of the pipe is to enclose the water vapour existing inside and cool it during its path from the distiller to the clean water tank (7) or to the vault (6). The length of this pipe will be as long as possible, since, the longer it is, the fewer distilled water losses there will be between the water to be distilled and the distilled water. It is recommended the same volume of water vapour contained in the distiller and at the same pressure. This pipe, as regards its installation, must always have a small slope of 0.1 to 0.3% in the direction from the opening to the pipe outlet.
   Figure 5 shows a section of the convergent duct (5) in which it can be seen that it comprises:
   - An outer insulating pipe (500), which purpose is to close the outlet of the carrier cooling liquid and isolate it from the exterior so that the room temperature thereof does not affect the carrier cooling liquid. A minimum diameter of 22mm, a minimum thickness of 1mm, and it can be made of metal, wood, plastic, any metal alloy or oil product, clay, resin, etc....
   - An inner circulation pipe (501) of the liquefaction system with a longitudinal axis coaxial to the longitudinal axis of the outer insulating pipe (500), as thin as possible in thickness, salt water resistant in its outer part and it will not have any type of odour in its inner part, for example glass, aluminum or any other similar metal, with a thickness of 0.5 to 1 mm. At the start of this pipe, and if necessary, there will be a pump which will push, through a propeller, the water vapour towards the end of the pipe. This motor will be supplied by renewable energies of the system. Inside this pipe there flows the water vapour coming from the distiller (2) pipes. As it is inclined by gravity, it will advance and increase its flow, as if it were a river. If the clean water flow were excessive or if it were advisable to reduce it, the system will be able to open along the circuit a valve or gate to take through another pipe, the distilled water to the clean water tank (7).
   The outer (500) and inner pipes (501) are joined by a plurality of fastening points or ribs (502), which create completely independent areas through which the carrier cooling liquid circulates.
c3) Additionally to the closed liquefaction tank (4) and to the convergent liquefaction duct (5), it is possible to connect to the clean water outlet a vault (6), inside of which the water vapour liquefaction process takes place by a water vapour disperser of the convergent pipes and a water disperser. This vault can also be used as a unique liquefaction system.

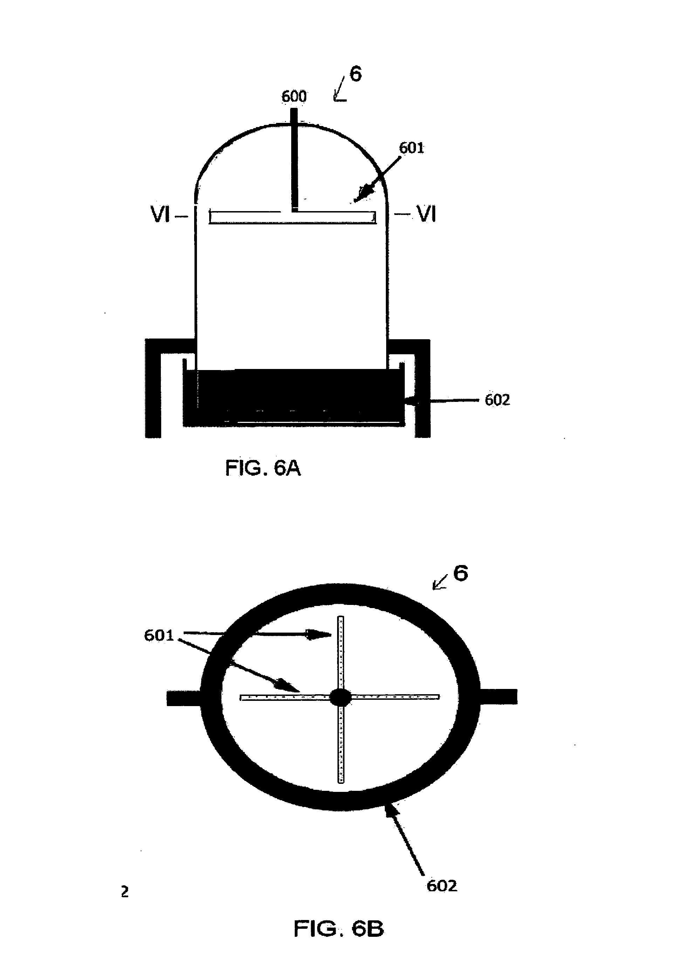

Figures 6A and 6B show a detail of the secondary liquefaction vault (6) to which the primary convergent liquefaction ducts (5) connect. Said vault comprises a water vapour disperser (600) which sends water vapour, coming from the inner pipe (501), to a water disperser (601) which, through its orifices, sends the water entering the vault and coming from the closed liquefaction tank (4), from the convergent liquefaction duct (5), or directly from the distiller (2), to the inside the vault dome for the cooling of the water vapour and its tank in the base of said vault (602).

The vapour disperser (600) is a pipe, at least 300mm long, and made of the same materials as the vault, and the water disperser (601) comprises a rectangular cross pipe with 4 edges and in each one of them orifices in the lower part, with a diameter of up to 20mm, through which the already distilled water propelled by the pressure and the inlet speed in the vault goes up.

The vaulted structure can be made of clay, metal, wood, plastic or combinations thereof. This vault has a thickness according to its capacity and cannot be lower than 1cm per each 3 m3 of its entire volume. This vault will always be covered by water up to a 1/10 level of the height, both inside and outside.

It is very important that regardless of the structure, format and material the liquefaction vault (6) is made of, the maximum temperature the vault can have in its inner area does not surpass 18 °C.

In all the facilities in which this vault is necessary, a refractory roof is installed which can contain solar panels or collectors. The important thing is that 24 hours a day the vault does not receive direct irradiation of any kind, or in any of its upper or lower outer parts.

According to the climatology of the area and of the different seasons of the year, the vault will be surrounded on its base by an important amount of completely distilled water and at room temperature. The temperature of this water is of no importance, since its mission is to balance the temperature existing inside the vault. This water will also serve as insulation for the water vapour coming from the distiller in the vault.

As the clean water levels surpass the pressure on the outlet valves, the filling of the final tank (7) will be carried out.

The evaporation speed of the water in the distiller must be equal to or greater than the liquefaction speed of the water both in the liquefaction pipe in the water and of the clean water liquefaction vault.

As regards the vault (6) dimensions, it must have, inside it, a volume, at least, equal to the cubic meters of the evaporation area of the distiller.

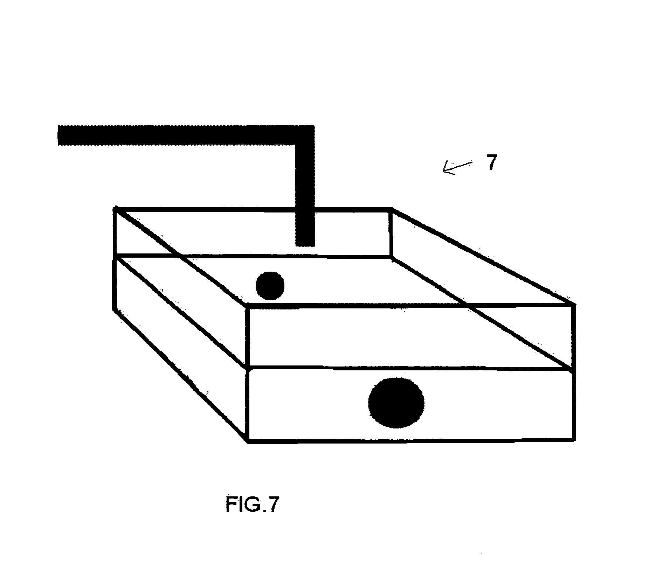

### d) Water tank (7) (Figure 7)

At the end of the distillation process, the water will be stored in an open tank (7). The end thereof is to be able to store water which will be necessary for its later evacuation to the drain system.

The functioning of the system of the invention is the following:
When the sun starts rising, it starts to irradiate on the vacuum tube thermal collectors and on the photovoltaic panels (PV) of the thermal energy generating system (8). Then it will be the time, since the plant will know when the sun has risen, when the control of the entire system will take place. Said task, as well as the resulting data will be registered in a computer system of management, measurement by measurement, peripheral device by peripheral device, sensor by sensor, etc....
When the sun rises, the charge levels of the batteries of the electric system will have a minimum charge of 75%, the cooling system of the water of the liquidizing apparatus (402) will be loaded with clean water from the previous day and cooled during the night. The distiller (2) will be completely clean and free of waste or harmful particles.

Once the collectors have heated, through the ByPass system, the primary heat-transfer fluid (HTF1) of the coil (1), at a temperature closed to the one programmed in the computer management system, initially for a seawater desalination facility, at 55° C or higher, will send the primary heat-transfer fluid (HTF1) to the heat accumulating system (3).

The primary heat-transfer fluid will enter the coil (1) of the heat accumulating system (3) at the required temperature, and it will exit it, at a noticeably lower temperature, since the primary heat-transfer fluid (HTF1) has supplied heat to the exchanger, and consequently, to the secondary heat-transfer fluid (HTF2) of the distiller (2) pipes (203).

The more heat the exchanger supplies to the secondary heat-transfer fluid (HTF2), the smaller the thermal leap at which the second phase will have to reach will be, and therefore, the electric energy consumption will be noticeably reduced.

Due to the heat of the layers in the liquids, the heat will go up through the heat accumulating system (3) up to the upper part where the resistors (301) are located. During a short period of time, according to the amount of secondary heat-transfer fluid (HTF2) to be heated, the temperature will go up until the necessary degrees. Once the required temperature supplied by the computer control system is obtained, the secondary heat-transfer fluid (HTF2) will go out towards the distiller for its heating.

For a correct distillation of seawater, the system must provide a secondary heat-transfer fluid (HTF2) with a minimum temperature of 96° C. It is important to point out that this temperature can and must be graduated according to the type of water to be distilled, since it can be salt water or not, or even being salt water, it can have different densities and components.

Therefore, from the heat accumulating system (3) there will only come out secondary heat-transfer fluid (HTF2) with a higher temperature than the one determined by the computer management system.

Parallel to the heat accumulating system (3) having a secondary heat-transfer fluid (HTF2) at the required temperature, the distiller (2) is filled with the water to be distilled, from the pumping station. This process is carried out in batches or in a sequential manner, according to the requirements and circumstances of each case and moment, in order to obtain a greater amount of distilled water in the shortest period of time possible, maintaining the final quality of the clean water.

A batch is defined as the maximum amount of water that can be contained in the distiller (2) at a required level by the computer management system of the system.

Sequential manner is defined as the process in which the secondary heat-transfer fluid (HTF2) enters through the lower part of the distiller, at a determined temperature, pressure and flow, immediately and at very short distance and passes through the pipes (203) inside of which it flows at a temperature, flow and pressure determined by the computer system, which facilitates the heat and starts the evaporation process on the required level surface inside the distiller (2), and later due to the rising of the molecular bubble, the breaking of the molecule occurs in the upper part where the filling level of the distiller (2) is at that time.

As the distillation and evaporation process takes place, an important amount of water vapour is condensed in the upper part, which, according to the m3 to be distilled, the hours of sun, etc..., it will be necessary to manage its pressure from the area of the distiller roof, and to perform the outlet duct openings, or in the case of very large facilities or many hours of sun, they will be free for the water vapour to come out naturally.

When all the water to be distilled comes out through the upper ducts (202) of the distiller (2), on the ground thereof the metals or waste of the distilled water will be decanted. Said waste, even in a semi-liquid state, through the opening of the valve located in the lowest part of the distiller, will fall and be stored for its later extraction and reuse in their respective uses.

Based on the salinity (if it is seawater) or on the composition of the dirty water to be distilled, the temperature will vary, if for any reason, the water to be distilled has molecules of any chemical product with lower evaporation temperature than the water, the autonomous distillation system of the invention will be able to eliminate it as long as the optimum evaporation temperature is adjusted, and before starting the procedure only with the water molecules.

Once the distilled water is obtained in the form of water vapour, that is, in gaseous state, it must be converted again into liquid, without altering its molecular composition, in the shortest period of time possible and in an industrial manner.

To that end, any of the liquefaction systems described above (Closed liquefaction tank (4), Convergent liquefaction duct (5) or Liquefaction vault (6)), in all cases a water vapour depressurization must be carried out through thermal transfer from heat to cold. Any of the systems to be used will absorb the heat coming from the water vapour and will pour said differential in the selected cold system. As the vapour condenses into water it will be decanted towards the outlet tank.

To that end, the liquefaction system can use any of the three liquefaction systems on their own or combined with the other two systems which can be complementary to one another and which will be used according to:
- The amount of water to be distilled
- The extension or surface available to be used by the plant
- The speed at which it is desired to perform the distillation
- The economic and financial resources to be used
- The ability to obtain non-corrosive water at low temperature

It should be noted that, if there are extreme needs, the autonomous system can always be supported by current technologies to that end, environmentally-friendly and whose energy is compulsorily autonomous and renewable.

Additionally, the water vapour can be liquefied in a vault (6). This method is slower at liquefying clean water, less expensive and better for great volumes of water.

For its operation a process is carried out consisting of wetting the water which is still in gaseous state with the already distilled water.

From the inner liquefaction pipe (501) there enters the water vapour mix into the vault through the vapour disperser (600). The vapour goes out through the orifices of the vapour disperser and the water drops at enough distance to go out through the holes located on top of the water disperser (601).

In this way the most vaulted high area will receive the water and liquefy it due to the great temperature difference which the rest of the vault will facilitate.

Little by little the distilled water will drop on the vault base (602) filled with initially clean water only until the discharge orifice.

With or without vault, according to the interests of the use of the invention, sanitary hot water will be produced at a temperature of up to 90°C, or clean water at a temperature of 15°C.

The decanting in a container or in a piping system of clean water or rainwater will come from the liquefaction system. It is important to know that rainwater cannot be used directly for human consumption since it lacks salts and other chemical components present in drinking water. The water produced by this invention has the same characteristics as rainwater before reaching the earth. Its use is recommended for any industrial, agricultural, urban end, and with the due purification, for human use.

Once the day ends, little by little the irradiation of the thermal systems will be reduced and the invention will produce less and less clean water, until each one of the independent systems of the thermal system, the heat accumulating system, consequently the distiller and the liquefaction system and its cold tank stop.

It is important to point out that the electric system, resistors (301), will keep generating energy as long as the electric power generating system (9) is not at charge levels above 80 %, or there exist operating electric elements.

## Claims

1. Autonomous distillation system **characterized in that** it comprises
- a pumped water distiller (2) comprising:
- at least one inlet (200) of water to be distilled,
- a plurality of pipes (203) containing inside them a secondary heat-transfer fluid, located in the lower part of the distiller (2), and
- a plurality of heat collection upper ducts (202),
- a heat accumulating system (3) with an inlet and an outlet for the secondary heat-transfer fluid of the distiller (2) pipes (203), for its heating, comprising an enclosed tank (300) which in turn comprises inside it:
- a coil (1), in the lower part of the enclosed tank (300), comprising in inside it a heat-transfer fluid heated by thermal energy (8), and
- a plurality of resistors (301) in the upper part of the enclosed tank (300), supplied by electric power (9),
- a liquefaction system of the water vapour obtained in the distiller comprising a medium through which the water vapour (400, 500, 600) flows, a medium through which there flows a liquid at room temperature (401, 501, 601) and a heat exchanging area between the water vapour and the liquid at room temperature so that, in an inertial manner, the liquid at room temperature collects the heat of the water vapour and reduces the pressure of the area through which the water vapour flows,
- a clean water tank (7) to which the distilled water coming from the liquefaction system arrives.

2. Autonomous distillation system according to claim 1 **characterized in that** in the liquefaction system the means through which the water vapour flows is a liquefaction tank (400) inside of which there are a plurality of ducts (401) as means through which there flows water at room temperature.

3. Autonomous distillation system according to claim 1 **characterized in that** in the liquefaction system the means through which the water vapour flows is an inner circulation pipe (501), with a longitudinal axis coaxial to the longitudinal axis of an outer insulating pipe (500) the diameter of which is greater than the inner circulation pipe (501) as means through which there.flows water at room temperature.

4. Autonomous distillation system according to claim 3 **characterized in that** the outer (502) and inner pipes (501) are joined by a plurality of fastening points or ribs (502), which create completely independent areas through which the carrier cooling liquid circulates.

5. Autonomous distillation system according to claims 2-4 **characterized in that** the liquefaction system comprises an outer cooling tank (402) of the water at room temperature.

6. Autonomous distillation system according to claim 1 **characterized in that** in the liquefaction system the means through which the water vapour flows is a water vapour disperser (600), the means through which there flows water at room temperature is a water disperser (601), both located inside a vault (600) as heat exchanging area.

7. Autonomous distillation system according to claims 2-5 **characterized in that** it comprises a vault (6) as complementary liquefaction system comprising a water vapour disperser (600), a water disperser (601) and a tank at the base of the vault (602).
